# EUROPEAN PATENT APPLICATION

(11) **EP 0 731 346 A1**
(43) Date of publication of application: **11.09.1996**
(21) Application number: 95301401.6
(22) Date of filing: 03.03.1995
(51) Int. Cl.: G01J 3/02

(54) **Spectrometer accessory**

(71) Applicant: PERKIN-ELMER LIMITED, Beaconsfield, Buckinghamshire HP9 1QA (GB)
(72) Inventor: Cutler, David John, Nr. Amersham, Bucks. HP7 OPF (GB)
(74) Representative: Smith, Norman Ian

(57) **Abstract**

An apparatus for use as accessory to a spectrometer includes a large diameter optical waveguide (16) for coupling the external radiation port of the spectrometer to an external device such as a flexible probe. Also disclosed is an optical arrangement for transferring an image from a first optical system to a second optical system substantially without aberration. This includes the use of two off-axis mirrors (26, 30) one of which operates in reverse to the other.

## Description

This invention relates to apparatus which can be used as an accessory or attachment to a spectrometer to enable analysis of samples remote from the spectrometer to be undertaken.

Spectrometers are used to analyse materials by irradiating the material with radiation and then detecting and analysing the spectrum of the radiation which is either reflected from or transmitted by the material. Spectrometers of this type have been known for a considerable period of time and are well-known. An example is the spectrometer manufactured and sold under the name Paragon 1000 by Perkin-Elmer. This is a spectrometer which can carry out analysis using infrared radiation.

Such spectrometers include at least one source of radiation, means for mounting a sample of material to be analysed and suitable optics for directing radiation to the sample and guiding radiation from the sample to a detector. It is also known to provide such instruments with a port which enables radiation from the on-board light source to be coupled to a suitable point remote from the instrument. In the past there have been problems in providing a suitable coupling for coupling the radiation from the output port to, for example, a sample location. The present invention is concerned with an accessory which can be attached to a spectrometer and which can provide a relatively simple and effective coupling means for coupling radiation from the spectrometer to an external location.

According to the present invention there is provided apparatus which can be used as an accessory or attachment to a spectrometer which has an outlet port through which analysing radiation can be transmitted, said apparatus including a housing which can be placed in juxtaposition with the spectrometer, said housing means carrying a coupling means for coupling to the external port of the spectrometer, waveguide means arranged to receive analysing radiation from said coupling means and to direct said radiation through the housing to a connector which can be connected to an analysing probe. The coupling means for coupling to said port may include a lens for focusing the analysing radiation onto the input end of said waveguide means. The waveguide means may comprise an optical fibre. The lens may be formed from an appropriate material depending upon the type of radiation employed. For example, the lens may be made from KBr, or ZnSe when infrared radiation is involved.

Preferably the fibre end is located at an image of the Bstop.

The connector may be a connector for connecting to an optical fibre type probe, the connector providing an outlet for guiding radiation from said waveguide means to the fibre of the probe and also having means for receiving radiation transmitted along the probe from, for example, a sample.

In making use of apparatus of the above-mentioned type, it is also usually necessary to direct the radiation received from a remote sample to a suitable detector so that the detected radiation can be analysed by the spectrometer. It is not usually possible to shine all the radiation directly onto the detector, because of the limited field of view of the detector. This means that some form of optical arrangement needs to be employed and this introduces the problem of aberrations. When coupling a high numerical aperture, large diameter optical fibre to a similarly sized detector, aberrations need to be minimised. The present arrangement is concerned with an optical arrangement which can couple radiation from an optical fibre to a detector substantially without aberration. Also the arrangement avoids the need for lenses which can be expensive in the case of infrared radiation. Although the apparatus has been designed for use with an infrared spectrometer, it is not intended that its use should be so limited since it will have application in any situation where substantially aberration-free coupling is desirable.

Thus, according to another aspect of the present invention there is provided an arrangement for coupling radiation propagating from a first optical system to a second optical system which comprises a first, relatively large aperture off-axis mirror arranged to produce a magnified image of the optical output of the first optical system, and a second, relatively large aperture off-axis mirror positioned so that the image produced by the first mirror constitutes the object of the second, the second mirror being arranged so that it functions effectively in reverse to the first, whereby it can produce a substantially non-magnified image of the optical output of the first system. The first optical system may include an optical waveguide. The second system may comprise a detector for detecting radiation transmitted from the optical waveguide positioned to receive the non-magnified image produced by the second mirror.

Preferably the mirrors are ellipsoidal. Also the mirrors may have a focal ratio of 1/√2.

It will thus be seen that any aberrations produced by the first mirror are essentially cancelled by the second mirror so that such aberrations are effectively minimised. Also the use of mirrors allows the cost of the arrangement to be reduced, particularly where infrared radiation is concerned since infrared transmitting lenses can be expensive.

The invention will be described now by way of example only, with particular reference to the accompanying drawings. In the drawings:
Figure 1 is a plan schematic view of an apparatus in accordance with the present invention, and
Figure 2 is a plan view similar to Figure 1 for illustrating the image transference aspect of the invention.

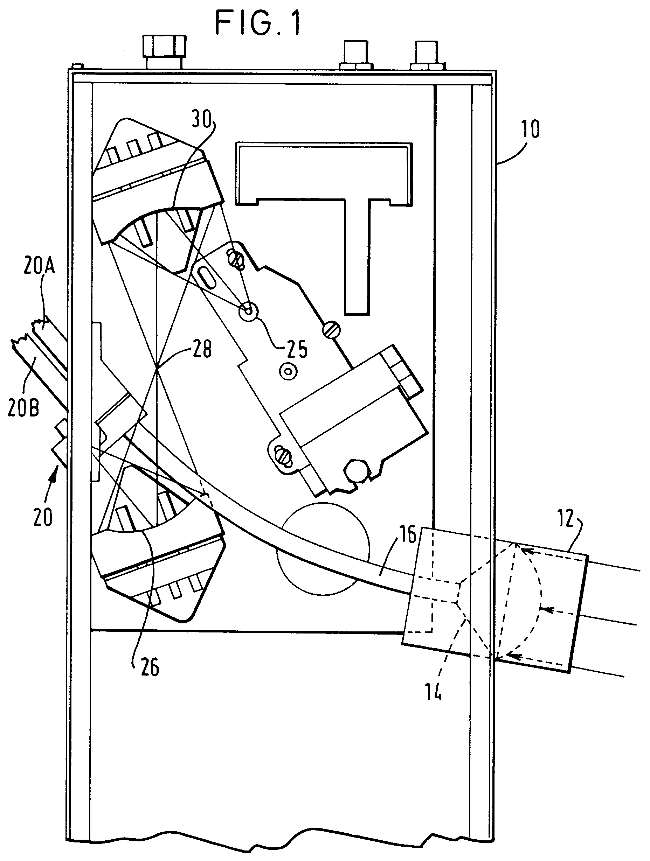

Referring to Figure 1, apparatus which can be used as an accessory or attachment for connection to a spectrometer includes a housing (10) of rectangular cross-section. The apparatus is designed for use in conjunction with an infrared spectrometer such as the Paragon instrument manufactured and sold by the Perkin-Elmer. It will however be appreciated that an apparatus working in accordance with the principles of the present invention can be used with many types of spectrometer.

The Paragon spectrometer includes an output port through which a beam of radiation from an internal source of radiation can be emitted. Typically this will be infrared radiation. The housing (10) shown in Figure 1 includes a coupling (12) which can be coupled to the output port of the spectrometer. The coupling (12) includes a launcher lens illustrated generally at (14), the launcher lens being arranged to focus the output beam onto the end of a large diameter optical fibre (16). The optical fibre (16) is arranged to extend across the width of the housing (10) and its opposite end is joined to a connecting assembly (20) mounted on the other side wall of the housing (10). The connecting assembly (20) can include two ports, one (20A) for directing radiation propagating along the fibre (16) into a flexible optical fibre probe (not shown) and the other (20B) for receiving radiation transmitted back along the probe from, for example, a remotely located sample. The flexible probe is not shown since it will be familiar to those skilled in the art.

The lens (12) functions to focus the radiation from the external beam of the spectrometer onto the end of the fibre (16). The fibre is located at an image of the Bstop since the fibre diameter is typically much smaller than the image. If the fibre is placed at the Jstop image then this can have effects on the wavelength calibration.

When infrared radiation is being transmitted the lens (14) will be made of KBr, ZnSe, or Quartz.

The position of the connecting assembly (20) is dependent upon the detector optics (to be described).

The present arrangement provides a very simple, but effective, means of coupling radiation from an external port of a spectrometer to an external facility such as a flexible optical fibre probe. The radiation is transferred by the internal fibre (16) to the connecting assembly (20). The numeral aperture of the internal fibre (16) should ideally match that of any probe attached to the connector assembly (20). Also it should be of a larger diameter since this will result in complete filling of the probe fibre etendue where the instrument etendue is greater than that of the fibre. This situation usually prevails.

The apparatus can be used over a wide range of radiation wavelengths such as the mid infrared, near infrared and visible provided the appropriate optical fibre is used.

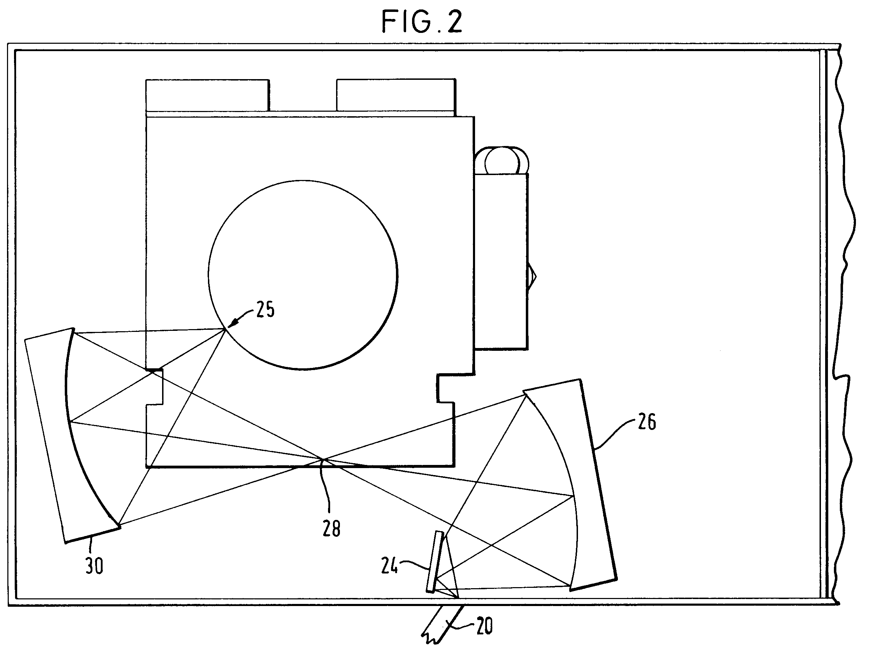

Referring again to Figure 1 and Figure 2 the apparatus shown also includes an optical arrangement for coupling radiation received from the optical fibre probe at the connector assembly (20) to a detector which is shown schematically at (25). The optical assembly includes, folding mirror (24), a first mirror (26) which is generally ellipsoidal and arranged off-axis in relation to the connector assembly (20). The mirror (26) is arranged to produce an intermediate magnified image of the end of the fibre in the connector assembly (20) at a position (28). The optical arrangement also includes a second mirror (30) which is so disposed that the image (28) represents the object of the mirror (30). The mirror (30) is essentially identical to the mirror (26). The mirror (30) is also disposed off-axis and is arranged to direct incident radiation onto the detector shown at (25).

The focal ratio of each of the mirrors (26 and 28) is 1/√2. The end of the optical fibre within the connector assembly (20) essentially constitutes an extended source. The mirror (26) which is a large aperture mirror effectively produces a magnified image of the fibre end at the position (28) and this is the object of the second mirror (30). The mirror (30) which operates in reverse to the mirror (26) effectively demagnifies the intermediate image to produce a final image of the fibre end at the detector substantially with no overall magnification. Also any distortion introduced by the first mirror (26) is effectively cancelled by the second mirror (28) so that the image generated is also free of distortion.

The above arrangement represents a relatively simple way of focusing an image of an extended source such as the end of an optical fibre onto a detector by means of an optical arrangement. The arrangement avoids the need for relatively expensive infrared lenses which are typically used in infrared spectroscopy. It also has the advantage that it can be used in confined spaced.

## Claims

1. Apparatus which can be used as an accessory or attachment to a spectrometer which has an outlet port through which analysing radiation can be transmitted, said apparatus including a housing which can be placed in juxtaposition with the spectrometer, said housing means carrying a coupling means for coupling to the external port of the spectrometer, waveguide means arranged to receive analysing radiation from said coupling means and to direct said radiation through the housing to a connector which can be connected to an analysing probe.

2. Apparatus according to claim 1, wherein the coupling means for coupling to said port may include a lens for focusing the analysing radiation onto the input end of said waveguide means.

3. Apparatus according to claim 1 or claim 2, wherein the waveguide means comprises an optical fibre. The lens may be formed from an appropriate material depending upon the type of radiation employed. For example, the lens may be made from KBr, ZnSe or Quartz when infrared radiation is involved.

4. Apparatus according to claim 3, wherein the fibre end is disposed at an image of the Bstop.

5. Apparatus according to any preceding claim, wherein the connector is a connector for connecting to an optical fibre type probe, the connector providing an outlet for guiding radiation from said waveguide means to the fibre of the probe and also having means for receiving radiation transmitted along the probe from, for example, a sample.

6. An optical arrangement for coupling radiation propagating from a first optical system to a second optical system which comprises a first, relatively large aperture off-axis mirror arranged to produce a magnified image of an optical output of the first system, and a second, relatively large aperture off-axis mirror positioned so that the image produced by the first mirror constitutes the object of the second, the second mirror being arranged so that it functions effectively in reverse to the first, whereby it can produce a substantially non-magnified image of the end of the output of the first system.

7. An arrangement according to claim 6, wherein the first optical system includes an optical waveguide and the second optical system comprises a detector for detecting radiation emanating from the waveguide.

8. An arrangement according to claim 7, including a detector for detecting radiation transmitted from the optical waveguide positioned to receive the non-magnified image produced by the second mirror.

9. An arrangement according to any preceding claim, wherein the mirrors are ellipsoidal.

10. An arrangement according to claim 9, wherein the mirrors have a focal ratio of 1/√2.

11. An apparatus according to any one of claims 1 to 5, in combination with a coupling arrangement according to any one of claims 6 to 10.
